# EUROPÄISCHE PATENTSCHRIFT

(11) **EP 1 322 508 B1**
(45) Veröffentlichungstag und Bekanntmachung des Hinweises auf die Patenterteilung: **07.05.2008**
(21) Anmeldenummer: 01976220.2
(22) Anmeldetag: 13.09.2001
(51) Int. Cl.: B60T 8/00

(54) **VERFAHREN ZUM ABSCHÄTZEN DER UMKIPPGEFAHR EINES FAHRZEUGS**
METHOD FOR ESTIMATING THE OVERTURN RISK OF A VEHICLE
PROCEDE POUR L'ESTIMATION DU RISQUE DE BASCULEMENT D'UN VEHICULE

(30) Priorität: 18.09.2000 DE 10046036
(43) Veröffentlichungstag der Anmeldung: 02.07.2003
(73) Patentinhaber: KNORR-BREMSE SYSTEME FÜR NUTZFAHRZEUGE GMBH, 80809 München (DE)
(72) Erfinder: SZABO, Gergely, H-1125 Budapest (HU); DOHANY, Tamás, H-1221 Budapest (HU); MERZA, Valér, H-2000 Szentendre (HU)
(86) Internationale Anmeldenummer: PCT/EP2001/010565
(87) Internationale Veröffentlichungsnummer: WO 2002/022416

(56) Entgegenhaltungen:
- EP-A- 0 684 150
- DE-A- 19 751 891
- DE-A- 19 856 303
- US-A- 3 797 893

## Beschreibung

Die vorliegende Erfindung betrifft ein Verfahren zum Abschätzen der Umkippgefahr eines Fahrzeugs gemäß dem Oberbegriff des Patentanspruches 1.

Ein solches Verfahren ist aus der gattungsgemäßen DE-A-19 751 891 bekannt. Dort werden Meßsignale von Raddrehzahlsensoren, eines Querbeschleunigungssensors, eines Gierratensensors und eines Lenkwinkelsensors ausgewertet, um eine Umkippgefahr zu ermitteln. Nach verschiedenen Untervarianten bei Einsatz bestimmter Regler, wie z.B. eines Bremsschlupfreglers, können einige der Sensoren auch fortgelassen werden und deren Informationen aus den Raddrehzahlsensoren ermittelt werden. In Abhängigkeit vom aktuellen Bremszustand des Fahrzeuges - gebremst oder ungebremst - werden kurzzeitig Bremsmomente und/oder Antriebsmomente erzeugt oder verändert, wobei die Gefahr eines Umkippens durch Überwachung des Raddrehzahlverhaltens der Räder abgeschätzt wird. Zur Ermittlung der Umkippgefahr wird dort auch ständig die Querbeschleunigung des Fahrzeuges bzw. die Winkelbeschleunigung um die Fahrzeuglängsachse sensiert. Das Überschreiten eines vorgegebenen Querbeschleunigungsgrenzwertes ist ein erstes Indiz dafür, daß sich das Fahrzeug in einer kritischen Situation befindet, in der Umkippgefahr bestehen kann. Bei ungebremstem Fahrzeug werden einzelne oder mehrere Räder gleichzeitig mit einem geringen Testbremsdruck beaufschlagt. Wenn sich durch den Testbremsdruck die Raddrehzahl nicht bzw. nur sehr wenig ändert, ist dies ein Indiz für eine hinreichend hohe Radaufstandskraft auf der Fahrbahn, d.h. das Rad droht nicht abzuheben. Wird das Rad hingegen bereits durch den geringen Testbremsdruck stark abgebremst, so ist dies ein Indiz für eine geringe Radaufstandskraft bzw. daß das Rad bereits von der Fahrbahn abgehoben hat.

Aus der DE 196 02 879 C1 ist ein Verfahren zum Erfassen der Gefahr des Umkippens eines mit ABS ausgerüsteten Fahrzeugs bekannt, bei dem ständig die Querbeschleunigung des Fahrzeugs überwacht wird. Überschreitet die Querbeschleunigung einen vorgegebenen Grenzwert, so erfolgt ein Bremseingriff mit einer geringen Testbremskraft. Hierbei wird überwacht, ob die Testbremskraft an dem zugeordneten Rad zu einem ABS-Eingriff führt, d.h. zu einer Blockiergefahr, was ein Indiz dafür ist, daß nur noch eine geringe Radaufstandskraft vorhanden ist bzw. daß das Rad bereits von der Fahrbahn abgehoben hat und Umkippgefahr besteht. Es wird also allein der Beginn des ABS-Regeleingriffs als Indiz für eine Umkippgefahr verwendet.

Aufgabe der Erfindung ist es, ein Verfahren anzugeben, mit dem die Umkippgefahr noch zuverlässiger abschätzbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ob tatsächlich eine Umkippgefahr besteht, wird folgendermaßen überprüft:

Bei gebremstem Fahrzeug wird an einzelnen oder mehreren kurveninneren Rädern gleichzeitig der Bremsdruck kurzzeitig abgesenkt und überwacht, ob sich die Raddrehzahl wenig oder stark ändert. Ändert sich die Raddrehzahl nur wenig oder gar nicht, so ist dies ein Indiz dafür, daß das Rad bereits abgehoben hat bzw. kurz vor dem Abheben ist. Wird das Rad hingegen relativ stark beschleunigt, so läßt dies darauf schließen, daß noch eine hinreichende Radaufstandskraft vorhanden ist.

Vorteilhaft wird anhand von Momentanbewegungsgrößen des Fahrzeugs die Wankbewegung für einen Zeitraum von beispielsweise 0,5-1,5 s vorausberechnet. Hierfür können insbesondere die Fahrzeugquerbeschleunigung, der zeitliche Gradient der Fahrzeugquerbeschleunigung sowie die Frequenz bzw. die Schwingungsdauer der Wankbewegung des Fahrzeugs um seine Längsachse verwendet werden. Mittels vorgegebener Bewegungsgleichungen, in die diverse Fahrzeugparameter, wie z.B. die Masse des unbeladenen Fahrzeugs, der Beladungszustand, die Lage des Fahrzeugschwerpunkts etc., eingehen, kann die zu erwartende Wankbewegung und somit die Kippgefahr des Fahrzeugs abgeschätzt werden. Die Zeitspanne für die eine Abschätzung möglich ist, hängt von der Fahrzeuggeschwindigkeit ab. Je höher die Fahrzeuggeschwindigkeit, umso früher muß eine kritische Situation erkannt werden.

Wird ein kritischer Fahrzustand, d.h. die Gefahr des Umkippens des Fahrzeugs erkannt, erfolgt ein Regeleingriff des Bremssystems, z.B. selektiv an einzelnen Rädern, wodurch die Umkippgefahr verringert und das Fahrzeug stabilisiert wird. Sofern eine Fahrsituation anhand der o.g. Verfahren unterschiedlich kritisch eingeschätzt wird, unterscheiden sich folglich auch die zur Fahrstabilisierung als erforderlich erachteten Regeleingriffe. Vorzugsweise wird dann der Regeleingriff mit der stärksten Bremsanforderung ausgewählt. Ferner wird dem ABS-System des Anhängerfahrzeugs gestattet, die gewählte Bremsanforderung zu verringern, so daß die Fahrzeugbewegung in der Kurvenfahrt beherrschbar bleibt.

Ein besonders vorteilhaftes Anwendungsgebiet der Erfindung liegt im Nutzfahrzeugbereich, da gerade hier immer wieder Unfälle durch Umkippen der von Zugfahrzeugen oder Anhängerfahrzeugen in Kurven oder bei heftigen Lenkbewegungen in Gefahrensituationen auftreten. Das Verfahren ist insbesondere für-Sattelschleppergespanne geeignet, da sich gefährliche, durch die dynamischen Fahrzeugbewegungen hervorgerufene Fahrzustände, die zum Umkippen des Sattelaufliegers führen würden, zuverlässiger erkennen lassen und rechtzeitig ein Bremseingriff durchgeführt werden kann.

Vorzugsweise ist das Verfahren in ein elektronisches Steuergerät (ECU) implementiert, das auf dem Zugfahrzeug oder dem Anhängerfahrzeug bzw. Auflieger angeordnet sein kann. Wenn das Steuergerät auf dem Zugfahrzeug angeordnet ist, wird das Steuergerät über eine Verbindungsleitung mit dem ABS-System des Anhängers verbunden.

Im folgenden wird die Erfindung anhand eines Ausführungsbeispiels im Zusammenhang mit der Zeichnung näher erläutert. Es zeigen:
- Fig. 1: ein Flußdiagramm eines Verfahrens zur Abschätzung der Umkippgefahr eines ungebremsten Fahrzeugs;
- Fig. 2: ein Flußdiagramm zur Abschätzung der Umkippgefahr eines gebremsten Fahrzeugs; und
- Fig. 3: ein Flußdiagramm zur Abschätzung der Umkippgefahr auf der Basis momentaner Bewegungsgrößen des Fahrzeugs.

Ausgangspunkt bei der Abschätzung der Umkippgefahr eines Fahrzeugs ist die Bestimmung der Fahrzeugquerbeschleunigung a_{quer}, was z.B. durch einen im Fahrzeug vorgesehenen Querbeschleunigungssensor möglich ist.

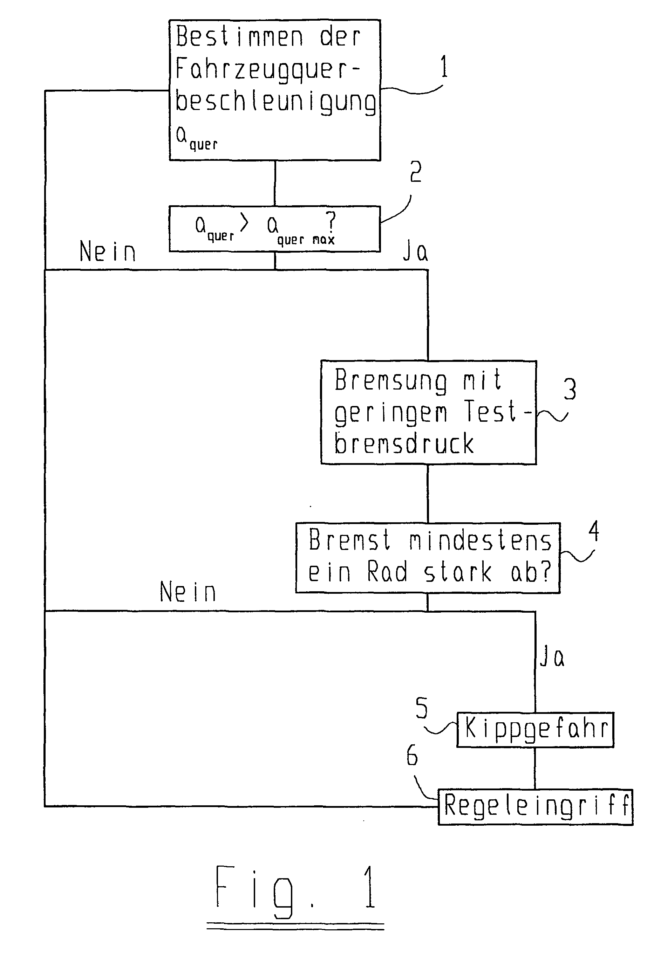

Fig. 1 zeigt ein Flußdiagramm zur Abschätzung der Umkippgefahr eines ungebremsten Fahrzeugs, wobei hier in Schritt 1 die Fahrzeugquerbeschleunigung a_{quer} bestimmt wird. "Ungebremst" bedeutet, daß vom Fahrer kein Bremsanforderungssignal vorliegt. In Schritt 2 wird die sensierte Fahrzeugquerbeschleunigung a_{quer} mit einem vorgegebenen Querbeschleunigungsgrenzwert a_{quer max} verglichen. Ist die sensierte Fahrzeugquerbeschleunigung a_{quer} kleiner oder gleich dem vorgegebenen Querbeschleunigungsgrenzwert a_{quer max}, so wird davon ausgegangen, daß keine Umkippgefahr besteht. Sofern das Fahrzeug weiterhin ungebremst ist, wird zu Schritt 1 zurückgesprungen.

Ist die sensierte Fahrzeugquerbeschleunigung a_{quer} größer als der vorgegebene Querbeschleunigungsgrenzwert a_{quer max}, so wird zumindest an einem oder mehrerer kurveninneren Fahrzeugrädern die zugeordnete Fahrzeugbremse mit einem geringen Testbremsdruck beaufschlagt. "Gering" bedeutet, daß der Testbremsdruck wesentlich kleiner als der Bremsdruck bei einer Vollbremsung ist und bei einer normalen Geradeausfahrt des Fahrzeugs zu keiner bzw. nur einer unwesentlichen Abbremsung des Rades bzw. des Fahrzeugs führt.

In Schritt 4 wird überprüft, ob bzw. wie sich das Raddrehzahlverhalten des Rades der mit Testdruck beaufschlagten Bremse ändert. Ändert sich die Raddrehzahl nicht bzw. nur unwesentlich, so läßt dies darauf schließen, daß an dem betrachteten kurveninneren Rad eine hinreichend hohe Radaufstandskraft vorhanden ist, die das Rad mit dreht, und folglich, daß keine Kippgefahr besteht. In diesem Fall wird wieder mit Schritt 1 begonnen. Wird das Rad hingegen stark abgebremst, so deutet dies auf einen Zustand 5 hin, in dem Kippgefahr besteht.

In diesem Fall erfolgt in Schritt 6 ein Regeleingriff durch das Bremssystem. Durch einen ggf. radselektiven Bremseingriff vergrößert sich die Radaufstandskraft wieder, und die Kippgefahr wird verringert. Ist das Fahrzeug weiterhin ungebremst, so wird erneut mit Schritt 1 begonnen.

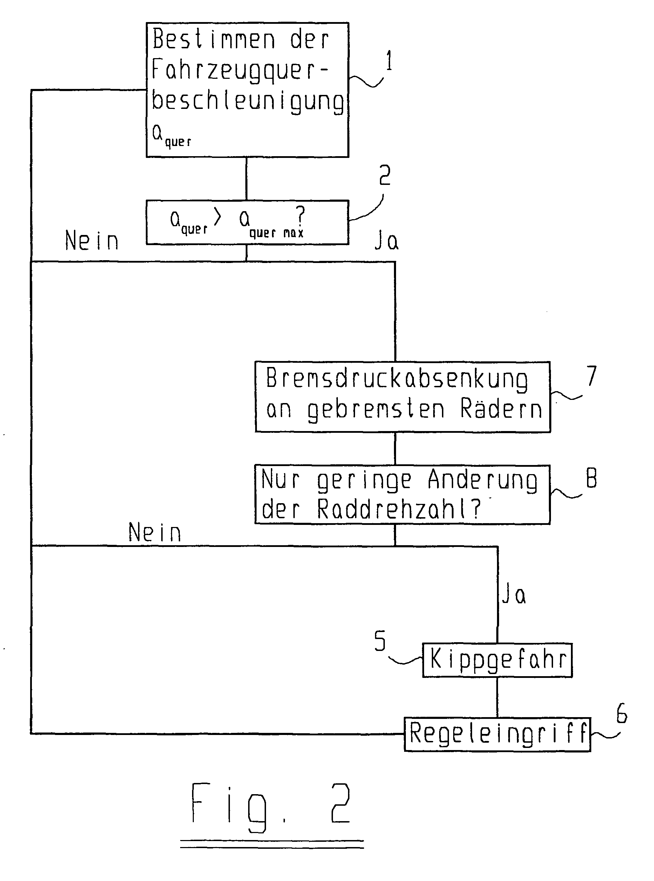

Fig. 2 zeigt ein Flußdiagramm zur Abschätzung der Umkippgefahr eines gebremsten Fahrzeugs. "Gebremst" bedeutet, daß der Fahrer über das Bremspedal einen Bremsdruck vorgibt, der größer als der o.g. Testbremsdruck ist. Entsprechend Fig. 1 wird in Schritt 1 die Fahrzeugquerbeschleunigung a_{quer} ermittelt, und in Schritt 2 wird überprüft, ob die sensierte Fahrzeugquerbeschleunigung a_{quer} größer bzw. kleiner oder gleich dem vorgegebenen Querbeschleunigungsgrenzwert a_{quer max} ist.

Sofern die sensierte Fahrzeugquerbeschleunigung a_{quer} größer als der Querbeschleunigungsgrenzwert a_{quer max} ist, wird in Schritt 7 der vom Fahrer vorgegebene Bremsdruck kurzzeitig an einem oder mehreren kurveninneren Rädern abgesenkt, worauf in Schritt 8 die sich einstellende Änderung der Raddrehzahl überwacht wird. Ändert sich die Raddrehzahl des bzw. der untersuchten kurveninneren Räder nur wenig, so läßt dies darauf schließen, daß keine bzw. nur noch eine geringe Radaufstandskraft vorhanden ist, d.h. daß das zugeordnete Rad sich kurz vor dem Abheben von der Fahrbahn befindet bzw. bereits abgehoben hat und daher nicht mehr beschleunigt wird. Folglich ist davon auszugehen, daß in Zustand 5 Kippgefahr besteht, die durch einen Regeleingriff der Bremsanlage in Schritt 6 verringert wird.

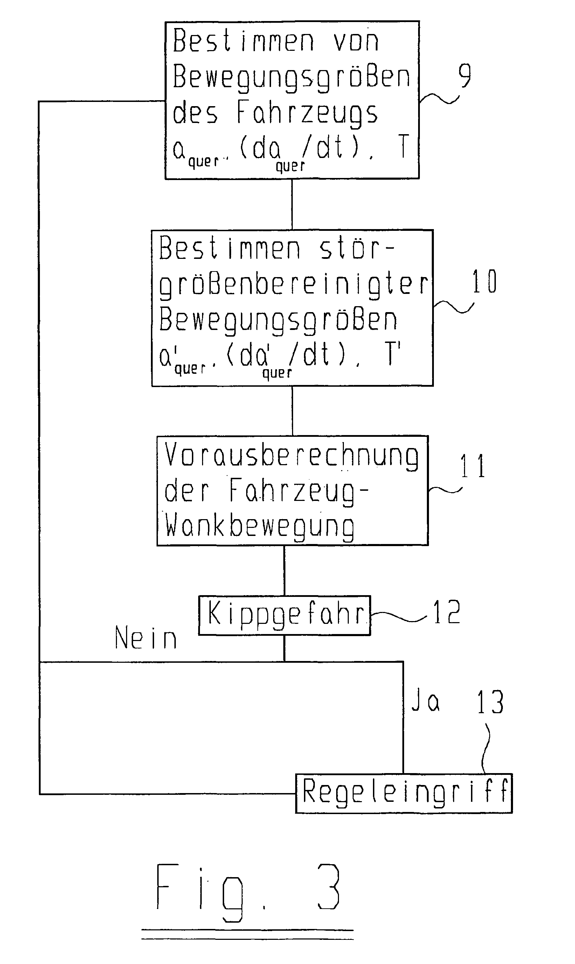

Fig. 3 beschreibt ein Verfahren zur Abschätzung der Umkippgefahr auf der Basis momentaner Bewegungsgrößen des Fahrzeugs. Bei diesem Verfahren werden in Schritt 9 die Fahrzeugquerbeschleunigung a_{quer} ermittelt sowie weitere die Fahrstabilität charakterisierende Größen, wie z.B. die zeitliche Ableitung der Fahrzeugquerbeschleunigung da_{quer}/dt und die Periodendauer T einer Wankschwingung des Fahrzeugs.

Bei der Sensierung der Fahrzeugquerbeschleunigung a_{quer} mittels eines Querbeschleunigungssensors können im Querbeschleunigungssignalverlauf diverse Signalspitzen auftreten, die z.B. durch Rauschsignale, Fahrzeugvibrationen oder Stöße aufgrund von Fahrbahnunebenheiten erzeugt werden. Derartige "Störgrößen" werden in Schritt 10 aus den in Schritt 9 ermittelten Signalen herausgefiltert, wodurch sich die störgrößenbereinigten Größen a'_{quer}, da'_{quer}/dt, T' ergeben.

Mittels vorgegebenen Bewegungsgleichungen des Fahrzeugs wird in Schritt 11 für eine bevorstehende kurze Zeitspanne von z.B. 0,5-1,5 s die erwartete Wankbewegung des Fahrzeugs vorausberechnet. In diese Bewegungsgleichungen können diverse fahrzeugspezifische Parameter, wie z.B. Fahrzeugmasse im unbeladenen Zustand, Lage des Fahrzeugschwerpunkts, Feder-/Dämpfungsparameter des Fahrzeugs, das momentane Motormoment sowie "Randbedingungen", wie z.B. die Fahrbahnneigung, etc., eingehen.

Anhand der vorausberechneten Wankbewegung kann abgeschätzt werden, ob in Zustand 12 Kippgefahr besteht. Analog zu den in Fig. 1 und 2 erläuterten Verfahren erfolgt bei Bestehen der Kippgefahr ein Regeleingriff (Schritt 6) des Bremssystems, der die Kippgefahr verringert.

Insbesondere das in Fig. 3 beschriebene Verfahren ermöglicht es, gefährliche fahrdynamische Zustände, wie z.B. in einer sich verengenden Kurve, bei einem mehrfachen Fahrstreifenwechsel, eine plötzlich eingeleitete länger andauernde Lenkbewegung etc., was zu einer Umkippsituation führen kann, rechtzeitig zu erkennen.

Die in den Figuren 1-3 beschriebenen Verfahren können separat durchgeführt werden. Besonders vorteilhaft ist es aber, wenn sie redundant, d.h. gemeinsam zur Erkennung kritischer Fahrzustände eingesetzt werden.

## Patentansprüche

1. Verfahren zum Abschätzen der Umkippgefahr eines Fahrzeugs, bei dem ständig die Querbeschleunigung des Fahrzeugs ermittelt wird, in Abhängigkeit von der Querbeschleunigung das Raddrehzahlverhalten von Fahrzeugrädern überwacht wird, wobei die Umkippgefahr redundant ermittelt wird, und zwar a) durch Vorausberechnen der zu erwartenden Wankbewegung des Fahrzeugs unter Verwendung der Querbeschleunigung (aquer) und b) in Abhängigkeit davon, ob das Fahrzeug gebremst oder ungebremst ist durch das Überwachen des Raddrehzahlverhaltens, indem bei gebremstem Fahrzeug der Bremsdruck einer Fahrzeugbremse abgesenkt wird und von einer Umkippgefahr ausgegangen wird, wenn die Raddrehzahl des zugeordneten Rades nur wenig oder überhaupt nicht zunimmt, **dadurch gekennzeichnet, dass** bei gebremstem Fahrzeug an Fahrzeugbremsen kurveninnerer Räder der Bremsdruck abgesenkt wird.

2. Verfahren nach Anspruch 1, **dadurch gekennzeichnet, dass** die erwartete Wankbewegung des Fahrzeugs für 0,5-1,5 s vorausberechnet wird.

3. Verfahren nach Anspruch 1, **dadurch gekennzeichnet, dass** die Abschätzung der Umkippgefahr erst bei Überschreiten einer vorgegebenen Querbeschleunigung (aquer max) durchgeführt wird.

4. Verfahren nach einem der Ansprüche oder 2, **dadurch gekennzeichnet, dass** bei ungebremstem Fahrzeug auf eine Fahrzeugbremse ein Testbremsdruck aufgebracht wird, der klein in Bezug auf den Bremsdruck einer Vollbremsung ist, und dass von einer Umkippgefahr ausgegangen wird, wenn der Testbremsdruck zu einer starken Abbremsung des zugeordneten Rades führt.

5. Verfahren nach einem der Ansprüche 1 bis 4, **dadurch gekennzeichnet, dass** bei der Vorausberechnung der Wankbewegung die zeitliche Änderung der Querbeschleunigung (daquer/dt) verwendet wird.

6. Verfahren nach einem der Ansprüche 1 bis 5, **dadurch gekennzeichnet, dass** bei der Vorausberechnung der Wankbewegung die Schwingungsdauer (T) bzw. die Frequenz der momentanen Wankbewegung des Fahrzeugs verwendet wird.

7. Verfahren nach einem der Ansprüche 1 bis 6, **dadurch gekennzeichnet, dass** vor der Vorausberechnung aus den hierfür verwendeten sensierten Bewegungsgrößen des Fahrzeugs Störeinflüsse herausgefiltert werden.

8. Verfahren nach einem der Ansprüche 1 bis 7, **dadurch gekennzeichnet, dass** bei ermittelter Umkippgefahr ein Bremseingriff des Bremssystems des Fahrzeugs erfolgt, der die Umkippgefahr verringert.

9. Verfahren nach einem der Ansprüche 1 bis 8, **dadurch gekennzeichnet, dass** bei Erkennen einer Umkippgefahr auf der Basis der Schritte a) und b) des Anspruchs 1 jeweils ein Bremseingriff für das Bremssystem ermittelt wird und derjenige Bremseingriff mit der höheren Bremsanforderung durchgeführt wird.

10. Verfahren nach einem der Ansprüche 1 bis 9, **dadurch gekennzeichnet, dass** in Schritt a) das Raddrehzahlverhalten kurveninnerer Räder überwacht wird.

11. Verfahren nach einem der Ansprüche 4 bis 10, **dadurch gekennzeichnet, dass** bei ungebremstem Fahrzeug der Testdruck auf Fahrzeugbremsen kurveninnerer Räder aufgebracht wird.

## Claims

1. A process for estimating the overturn risk of a vehicle in which the transverse acceleration of the vehicle is determined constantly and the wheel speed behaviour of the vehicle wheels is monitored dependent on the transverse acceleration, the overturn risk being determined redundantly a) by pre-calculating the anticipated rolling motion of the vehicle using the transverse acceleration (aquer) and b) depending on whether the vehicle is braked or unbraked by monitoring the wheel speed behaviour by reducing the braking pressure of a vehicle brake when the vehicle is braked and assuming an overturn risk if the wheel speed of the associated wheel increases only slightly or not at all,
**characterised in that**
when the vehicle is braked the braking pressure is reduced at vehicle brakes on wheels on the inside of bends.

2. A process in accordance with claim 1,
**characterised in that**
the anticipated rolling motion of the vehicle is pre-calculated for 0.5 to 1.5 seconds.

3. A process in accordance with claim 1,
**characterised in that**
the overturn risk is not estimated until a predetermined transverse acceleration (aquer max) is exceeded.

4. A process in accordance with one of claims 1 or 2,
**characterised in that**
when the vehicle is unbraked a test braking pressure which is low in relation to the braking pressure of full braking is applied to a vehicle brake and an overturn risk is assumed when the test braking pressure leads to strong braking of the associated wheel.

5. A process in accordance with one of claims 1 to 4,
**characterised in that**
the variation in the transverse acceleration over time (daquer/dt) is used in pre-calculating the rolling motion.

6. A process in accordance with one of claims 1 to 5,
**characterised in that**
the period of vibration (T) or the frequency of the rolling motion of the vehicle at a given time is used in pre-calculating the rolling motion.

7. A process in accordance with one of claims 1 to 6,
**characterised in that**
prior to pre-calculating the rolling motion parasitic inductions are filtered out of the sensed motion values used for said pre-calculation.

8. A process in accordance with one of claims 1 to 7,
**characterised in that**
once an overturn risk has been determined the braking system of the vehicle is engaged in such a manner as to reduce the overturn risk.

9. A process in accordance with one of claims 1 to 8,
**characterised in that**
when an overturn risk is identified on the basis of steps a) and b) as disclosed in claim 1 a brake engagement is determined for the brake system and the brake engagement with the higher brake requirement is carried out.

10. A process in accordance with one of claims 1 to 9,
**characterised in that**
in step a) the wheel speed behaviour of wheels on the inside of bends is monitored.

11. A process in accordance with one of claims 4 to 10,
**characterised in that**
when the vehicle is unbraked the test pressure is applied to vehicle brakes on wheels on the inside of bends.

## Revendications

1. Procédé d'évaluation du danger de basculement d'un véhicule automobile, dans lequel on détermine constamment l'accélération transversale du véhicule, on contrôle le comportement en rotation des roues du véhicule en fonction de l'accélération transversale en déterminant ainsi de manière redondante le danger de basculement est de fait a) en calculant à l'avance le mouvement de roulis du véhicule auquel on doit s'attendre en utilisant l'accélération transversale ( aquer ) et b) en fonction du point de savoir si le véhicule est freiné ou ne l'est pas par le contrôle du comportement de la vitesse de rotation des roues, en abaissant, lorsque le véhicule est freiné, la pression de freinage d'un frein du véhicule et on pose en principe qu'il y a un danger de basculement si la vitesse de rotation de la roue associée n'augmente alors que peu ou absolument pas,
**caractérisé en ce que**, lorsque le véhicule est freiné, on abaisse la pression de freinage sur freins de véhicule de roues se trouvant à l'intérieur de la courbe.

2. Procédé suivant la revendication 1, **caractérisé en ce que** l'on calcule à l'avance pendant 0,5 à 1,5 s le mouvement de roulis du véhicule, auquel on peut s'attendre.

3. Procédé suivant la revendication 1, **caractérisé en ce que** l'on effectue l'évaluation du danger de basculement seulement lorsqu'une accélération transversale prescrite (aquer max) est dépassée.

4. Procédé suivant l'une des revendications 1 ou 2, **caractérisé en ce**, lorsque le véhicule n'est pas freiné, on applique à un frein du véhicule une pression de freinage de test qui est plus petite que la pression de freinage d'un freinage complet et en ce qu'on pose en principe qu'il y a un danger de basculement si la pression de freinage de test donne un freinage fort de la roue associée.

5. Procédé suivant l'une des revendications 1 à 4, **caractérisé en ce que**, lors du calcul à l'avance du mouvement de roulis, on utilise la variation en fonction du temps de l'accélération transversale ( daquer/dt ).

6. Procédé suivant l'une des revendications 1 à 5, **caractérisé en ce que**, lors du calcul préalable du mouvement de roulis, on utilise la durée ( T ) d'oscillation ou la fréquence du mouvement de roulis instantanée du véhicule.

7. Procédé suivant l'une des revendications 1 à 6, **caractérisé en ce qu'**avant le calcul préalable, on écarte par filtrage, des grandeurs de déplacement du véhicule détectées et utilisées à cet effet, des influences perturbatrices.

8. Procédé suivant l'une des revendications 1 à 7, **caractérisé en ce que**, si l'on détermine un danger de basculement, on intervient sur le système de freinage du véhicule d'une façon qui diminue le danger de basculement.

9. Procédé suivant l'une des revendications 1 à 8, **caractérisé en ce que**, lorsque l'on détecte un danger de basculement sur la base des stades a ) et b ) de la revendication 1, on détermine respectivement une intervention sur le système de freinage et on effectue cette intervention en ayant l'exigence de freinage la plus grande.

10. Procédé suivant l'une des revendications 1 à 9, **caractérisé en ce qu'**au stade a ) on contrôle le comportement de la vitesse de rotation des roues à l'intérieur de la courbe.

11. Procédé suivant l'une des revendications 4 à 10, **caractérisé en ce que**, lorsque le véhicule n'est pas freiné, on applique la pression de test sur les freins du véhicule de roues se trouvant à l'intérieur de la courbe.
